# EUROPEAN PATENT APPLICATION

(11) **EP 4 339 032 A1**
(43) Date of publication of application: **20.03.2024**
(21) Application number: 22806313.7
(22) Date of filing: 24.03.2022
(51) Int. Cl.: B60R 11/00, B08B 3/02, H05K 7/20

(54) **HIDDEN TOP LASER RADAR INTEGRATED BOX AND VEHICLE HAVING SAME**

(30) Priority: 12.05.2021 CN 202121015524 U
(71) Applicant: Wuhan Lotus Cars Co., Ltd., Wuhan, Hubei 430056 (CN)
(72) Inventor: LI, Hongshuang, Wuhan, Hubei 430056 (CN); LIU, Shaoyan, Wuhan, Hubei 430056 (CN); LI, Bo, Wuhan, Hubei 430056 (CN); ZHU, Yongqing, Wuhan, Hubei 430056 (CN); WANG, Yanhong, Wuhan, Hubei 430056 (CN); HE, Shichao, Wuhan, Hubei 430056 (CN); LONG, Xiange, Wuhan, Hubei 430056 (CN); WEI, Qunxiong, Wuhan, Hubei 430056 (CN)
(74) Representative: Zaboliene, Reda
(86) International application number: PCT/CN2022/082891
(87) International publication number: WO 2022/237343

(57) **Abstract**

A hidden top laser radar integrated box, comprising at least an outer housing (10), a lifting/lowering device (20), a laser radar (40), a controller (50), and a lower cover plate (60). The lifting/lowering device (20), the laser radar (40) and the controller (50) are located between the outer housing (10) and the lower cover plate (60). The laser radar (40) is located above the lifting/lowering device (20). The lifting/lowering device (20) can be extended or shortened under the control of the controller (50) to drive the laser radar (40) to extend out of an automobile or retract into the automobile. 2. The hidden top laser radar integrated box according to claim 1, wherein the lifting/lowering device (20) comprises at least a driving device (21) and a lifting/lowering platform (22) connected to the driving device (21); the driving device (21) comprises a motor (211); the lifting/lowering platform (22) comprises a screw rod (221), a first lifting/lowering rod (222), a second lifting/lowering rod (223), a supporting rod (224); the first lifting/lowering rod (222) and the second lifting/lowering rod (223) are cross-pivotally connected; the screw rod (221) is connected to the lower parts of the first lifting/lowering rod (222) and the second lifting/lowering rod (223); the supporting rod (224) is connected to the upper parts of the first lifting/lowering rod (222) and the second lifting/lowering rod (223); the screw rod (221) is transmittingly connected to an output shaft of the motor (211); and the distance between opposite ends of the first lifting/lowering rod (222) and the second lifting/lowering rod (223) can be increased or reduced under the driving of the motor (211), so that the lifting/lowering platform (22) is extended or shortened.

## Description

### TECHNICAL FIELD

The present document relates to a field of laser radar technology, in particular to a hidden top laser radar integrated box and a vehicle having the same.

### DESCRIPTION OF RELATED ART

Laser radar is an important sensor for achieving high-level intelligent driving and autonomous driving. The use of laser radar can make up the shortcomings of cameras and millimeter wave radar. Compared to cameras, it can build a more realistic 3D environment without relying on ambient light. Compared to millimeter wave radar, it has higher resolution and more accurate object recognition abilities.

At present, limited by the size of the laser device and the area of the laser emitting (receiving) mirror, the overall size of laser radar is larger than that of cameras and millimeter wave radars. Therefore, it is difficult to arrange on the vehicle and is easily limited by layout and configuration of the vehicle.

### SUMMARY

### TECHNICAL PROBLEM

There are some shortcomings in the existing technologies:
1. The applied fixing device for the laser radar protrudes out from a roof surface of the vehicle, which affects the overall appearance of the vehicle and brings heat dissipation issues of the laser radar.
2. The protrusion radar structure increases the windward area and the wind resistance of the vehicle, and is not benefit for the vehicle endurance.
3. There is no active cleaning mechanism. If dirt such as soil and insect bodies covers the surface of the laser radar during the autonomous driving process, it will affect the normal operation of the radar and lead to the degradation of the autonomous driving function.
4. The single laser radar on the vehicle roof can only sense the forward field of the view environment.
5. The applied fixing device for the laser radar exposes the laser radar lens outside, while the laser radar lens is mostly made of PC or glass material, with a hardness less than sand and gravel, which brings a higher risk of being scratched during use.

### TECHNICAL SOLUTION

In view of the above problems, the present document provides a hidden top laser radar integrated box and a vehicle having the same, which solves the problem of limited view field of a single laser radar and inability to sense the rear environment of the vehicle, simultaneously meets the requirements for beautiful roof configuration and enhances the technology sense of the vehicle, and integrates a hidden cleaning system to improve user experience.

The present document provides a hidden top laser radar integrated box, which includes at least an outer housing, a lifting/lowering device, a laser radar, a controller, and a lower cover plate. The lifting/lowering device, the laser radar, and the controller are located between the outer housing and the lower cover plate, and the laser radar is located above the lifting/lowering device. The lifting/lowering device is capable of being extended or shortened under a control of the controller, driving the laser radar to extend outside or retract into the vehicle.

Furthermore, the lifting/lowering device includes at least a driving device and a lifting/lowering platform connected to the driving device. The driving device includes a motor, while the lifting/lowering platform includes a screw rod, a first lifting/lowering rod, a second lifting/lowering rod, and a supporting rod. The first lifting/lowering rod and the second lifting/lowering rod are crossed and pivotally connected with each other. The screw rod is connected to lower parts of the first lifting/lowering rod and the second lifting/lowering rod, The supporting rod is connected to upper parts of the first lifting/lowering rod and the second lifting/lowering rod, and the screw rod is connected to an output shaft of the motor through transmission, so that a distance between opposite ends of the first lifting/lowering rod and the second lifting/lowering rod could increase or decrease under the driving of the motor, thereby extending or shortening the lifting/lowering platform.

Furthermore, the driving device further includes a gear and a rotating shaft. One end of the rotating shaft is connected to the output shaft of the motor, and the other end the rotating shaft is provided with a plurality of teeth. The gear is located at one end of the screw rod, and the teeth at the other end of the rotating shaft engage with the gears on the screw rod, driving the screw rod to rotate under the drive of the motor.

Furthermore, the lifting/lowering platform further includes an upper guide block and a lower guide block. Upper ends of the first and the second lifting/lowering rods are both pivotally connected with the upper guide block, and lower ends of the first and the second lifting/lowering rods are both pivotally connected with the lower guide block. The upper guide block and the lower guide block are both provided with small holes, and two opposite ends of the supporting rod pass through the small holes of the upper guide block, and one end of the supporting rod is slidably connected to the upper guide block. Two opposite ends of the screw rod pass through the small holes of the lower guide block, and one end of the screw rod is threaded with the lower guide block.

Furthermore, the hidden top laser radar integrated box further includes a cleaning device located on opposite sides of the laser radar. Two opposite ends of the supporting rod is provided with brackets, which are connected to the cleaning device and the laser radar.

Furthermore, the cleaning device includes at least a fixing frame, an electromagnetic valve, a nozzle, a connecting portion, and a water inlet. The fixing frame is connected to the laser radar, and the electromagnetic valve, the nozzle, the connecting portion, and the water inlet are arranged on the fixing frame. One end of the electromagnetic valve is connected to the connecting portion, and the other end of the electromagnetic valve is connected to the water inlet. A pipeline connected to the water inlet is connected to a vehicle water circuit. The nozzle is connected to the connecting portion, and is provided with a telescopic function.

Furthermore, one side of the laser radar is provided with a mirror surface, and the other side of the laser radar is connected with a second cable, which is connected to an autonomous driving domain controller or an advanced auxiliary driving domain controller.

Furthermore, a sealing ring is further provided around a top portion of the outer housing.

Furthermore, the hidden top laser radar integrated box further includes a water tray. The lower cover plate is located within the water tray, and a drainage outlet is further provided on the water tray. A water pipe connected to the drainage outlet is connected to a vehicle water circuit.

The present document further provides a vehicle, which includes the hidden top laser radar integrated box as described above.

### BENEFICIAL EFFECTS

The present document provides a hidden top laser radar integrated box being designed at a vehicle roof, a position of which is relatively high and makes the laser radar not easily obstructed or destroyed and have a wide field of view, and further can expand the view field of the laser radar to a maximum extent, thereby improving environmental perception effect of the laser radar, and solving the heat dissipation problem caused by radar operation through natural wind cooling. The hidden top laser radar integrated box has a hidden function. When the laser radar is in standby mode, the laser radar, the lifting/lowering device, and the cleaning device are all hidden inside a roof cover of the vehicle, which enhances the overall feel and aesthetics of the vehicle, and a mirror surface of the laser radar is not easy to come into contact with soil and other dirt, thereby implementing an active cleaning function of the laser radar, and improving the user experience.

### BRIEF DESCRIPTION OF THE DRAWINGS

Figure 1 is a schematic view showing an installation position of the hidden top laser radar integrated box on a vehicle roof according to an embodiment of the present document.
Figure 2 is an exploded view of the hidden top laser radar integrated box according to an embodiment the present document.
Figure 3 is a schematic structural view of a lifting/lowering device in an embodiment of the present document.
Figure 4 is a schematic top view of a cleaning device and a laser radar in an embodiment of the present document.

### DETAILED DESCRIPTION OF THE EMBODIMENTS

The specific embodiments of the present document will be further described in detail below with reference to the accompanying drawings and examples. The following examples are used to illustrate the present document, but are not used to limit the scope of the present document.

In the description of the present document, it should be noted that, the orientation or positional relationship indicated in this description is based on the orientation or positional relationship shown in the drawings, and is only for the convenience of describing the present document and simplifying the description, rather than indicating or implying that the device or element must have a specific orientation, be constructed and operate in a specific orientation, and therefore should not be construed as a limitation of the present document.

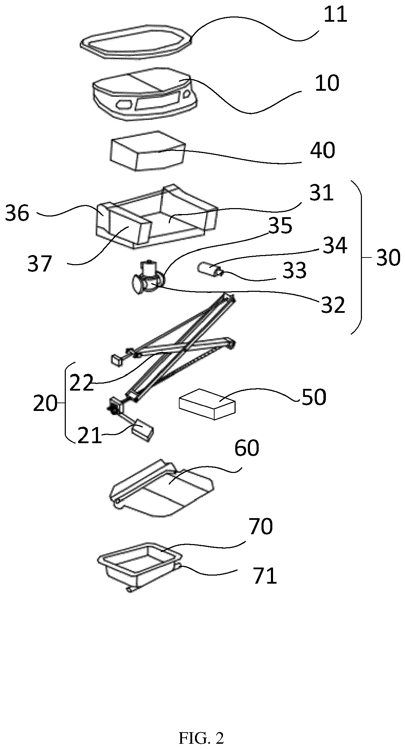

Please refer to Figure 2, the hidden top laser radar integrated box provided by the present document includes at least an outer housing 10, a lifting/lowering device 20, a cleaning device 30, a laser radar 40, a controller 50, a lower cover plate 60, and a water tray 70. The laser radar 40, the lifting/lowering device 20, the cleaning device 30, and the controller 50 are all located between the outer housing 10 and the lower cover plate 60. The laser radar 40 is located above the lifting/lowering device 20, and the lifting/lowering device 20 can be extended or shortened under a control of the controller 50, driving the laser radar 40 to extend outside or retract into the vehicle. The cleaning device 30 is located on two opposite sides of the laser radar 40, the lower cover plate 60 is located in the water tray 70, and the controller 50 is connected to an autonomous driving domain controller or an advanced auxiliary driving domain controller through a first cable.

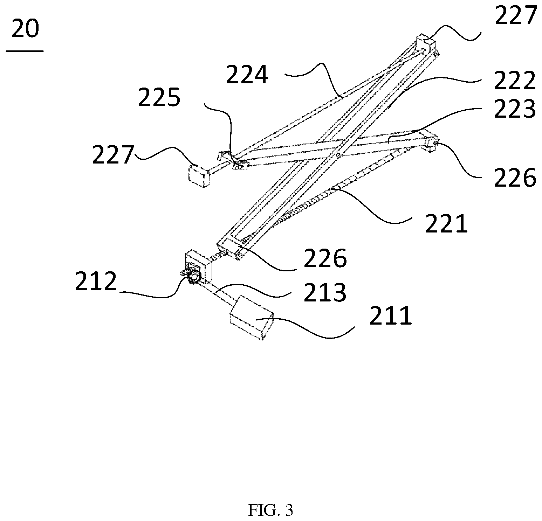

Specifically, please refer to Figure 3 together, the lifting/lowering device 20 includes at least a driving device 21 and a lifting/lowering platform 22 connected to the driving device 21. The driving device 21 includes a motor 211, a gear 212, and a rotating shaft 213. The lifting/lowering platform 22 includes a screw rod 221, a first lifting/lowering rod 222, a second lifting/lowering rod 223, a supporting rod 224, an upper guide block 225, two lower guide blocks 226, and two bracket 227.

Furthermore, one end of the rotating shaft 213 is connected to an output shaft of the motor 211, and the other end of the rotating shaft 213 is equipped with a plurality of teeth. The gear 212 is located at one end of the screw rod 221, and the teeth at the other end of the rotating shaft 213 engage with the gear 212 on the screw rod 221. Under the drive of the motor 211, the screw rod 221 is driven to rotate.

Furthermore, the first lifting/lowering rod 222 and the second lifting/lowering rod 223 are crossed and pivotally connected with each other. An upper end of the first lifting/lowering rod 222 is pivotally connected with one bracket 227, an upper end of the second lifting/lowering rod 223 is pivotally connected with the upper guide block 225. Lower ends of the first lifting/lowering rod 222 and the second lifting/lowering rod 223 are both pivotally connected with the lower guide blocks 226. The upper guide block 225 is provided with a small hole, and one end of the supporting rod 224 passes through the small hole of the upper guide block 225, and is slidably connected to the upper guide block 225. The lower guide block 226 is also provided with a small hole. The two opposite ends of the screw rod 221 pass through the small holes of the lower guide blocks 226, and the end of the screw rod 221 near the motor 211 is threaded with a corresponding lower guide block 226. When the motor 211 drives the screw rod 221 to rotate, the lower guide block 226, which is threaded to the screw rod 221, undergoes a relative motion with the screw rod 221, driving a bottom end of the first lifting/lowering rod 222 to move along the screw rod 221, thereby changing a vertical height of the first lifting/lowering rod 222 and achieving a lifting/lowering function. Both ends of the supporting rod 224 are fixed with the brackets 227, which are connected to the cleaning device 30 and the laser radar 40. Therefore, the lifting/lowering platform 22 can drive the cleaning device 30 and the laser radar 40 to go up and down.

It should be noted that the lifting/lowering device 20 is not limited to the lifting/lowering device 20 described in this embodiment. Any device with lifting/lowering function can replace the lifting/lowering device 20 of this embodiment. The specific structure of the lifting/lowering device in the existing technology will not be described in the present document.

It should be further noted that the device that extends the laser radar 40 outside or hides the laser radar 40 inside of the vehicle roof in the present document is not limited to the lifting/lowering device 20 described in this embodiment, but can also be a flipping or rotating device. The flipping or rotating device can flip or rotate around an axis on one side of a vehicle roof opening and be fixed with the laser radar 40. During the rotation process, the laser radar 40 can be rotated outside or inside of the vehicle roof. The specific structure of the flipping or rotating device in the prior art will not be further described in the present document.

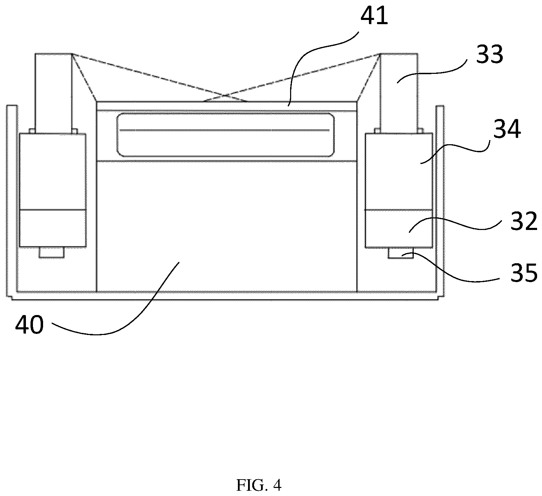

Furthermore, please refer to Figure 4, the cleaning device 30 includes at least a fixing frame 31, an electromagnetic valve 32, a nozzle 33, a connecting portion 34, and a water inlet 35. The laser radar 20 is arranged on the fixing frame 31, and both sides of the fixing frame 31 is provided with a combination structure 311 of the electromagnetic valve 32, the nozzle 33, the connecting portion 34, and the water inlet 35. Specifically, one end of the electromagnetic valve 32 is connected to the connecting portion 34, and the other end of the electromagnetic valve 32 is connected to the water inlet 35 to control the opening and closing of the water inlet 35. A pipeline connected to the water inlet 35 is connected to a vehicle water circuit. The nozzle 33 is connected to the connecting portion 34, and the nozzle 33 has a telescopic function. When the nozzle 33 is not in use, it retracts back into the interior of the connecting portion 34. When the nozzle 33 is in use, it extends out of the connecting portion 34 through the action of water pressure.

It should be noted that the nozzle 33 can be a telescopic structure that can be expanded or retracted relative to the connecting portion 34 or be a fixed structure directly fixed to the connecting portion 34. In this embodiment, the nozzle 33 is a telescopic structure.

Please refer to Figure 4, one side of the laser radar 40 is fixed with a mirror 41, and the other side of the laser radar 40 is connected with a second cable. The second cable is connected to the autonomous driving domain controller or the advanced auxiliary driving domain controller. When the laser radar 40 detects that the mirror 41 is dirtied, the second cable may transmit a signal to the autonomous driving domain controller or the advanced auxiliary driving domain controller. The autonomous driving domain controller or the advanced auxiliary driving domain controller sends a cleaning signal to the electromagnetic valve 32. The electromagnetic valve 32 opens, and the nozzle 33 extends out to spray water on the mirror 41 for cleaning work. The figure shows an extension state of the nozzle 33, and the dashed line shows a spraying range, it can be seen that the water sprayed by the nozzles 33 on both sides can cover the entire mirror 41.

It should be noted that as shown in Figure 2, the outer housing 10 is equipped with multiple windows, including a mirror window, a nozzle window, a second cable window of the laser radar, a first cable window of the controller, and a water pipe window of the water inlet, which are not shown in Figure 2.

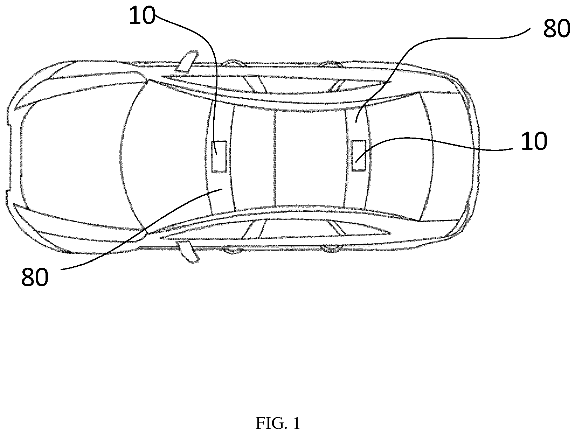

Furthermore, the water tray 70 is further equipped with a drainage outlet 71, which is connected to a water pipe connected to the vehicle water circuit. After the cleaning device 30 completes cleaning, sewage will accumulate in the water tray 70 and be discharged into a vehicle drainage channel through the drainage outlet 71. The water tray 70 is fixed inside of a roof cover 80 (see Figure 1).

Furthermore, please refer to Figure 2, a sealing ring 11 is disposed around a top portion of the outer housing 10. When the outer housing 10 is retracted, the upper surface of the outer housing 10 is coplanar with a top surface around an opening of the roof cover 80. The sealing ring 11 contacts with the surrounding area of the opening to prevent rainwater from entering the hidden top laser radar integrated box to protect the laser radar 40.

It should be noted that as shown in Figure 1, the hidden top laser radar integrated box provided by the present document can be installed on the front and the rear sides of the roof cover 80, and the quantity of the hidden top laser radar integrated box can be increased or decreased as needed, allowing for simultaneous sensing the environment on the front and the rear sides of the vehicle.

The working principle of the hidden top laser radar integrated box provided by the present document is as follows: when the user has driving requirements, the automatic driving domain controller or the advanced auxiliary driving domain controller sends a signal to open the top laser radar integrated box, the controller 50 inside the integrated box drives the motor 211 to rotate forward, the lifting/lowering device 20 starts to work, and the motor 211 drives the screw rod 221 to rotate through the gear 212, the first lifting/lowering rod 222 and the second lifting/lowering rod 223 drive the laser radar 40 and the cleaning device 30 to rise. When the laser radar 40 and the cleaning device 30 rise to the outer side of the roof cover 80, the laser radar 40 begins to work. When the laser radar 40 detects that the mirror 41 is dirtied, a dirt signal will be sent to the autonomous driving domain controller or the advanced auxiliary driving domain controller. The autonomous driving domain controller or the advanced auxiliary driving domain controller will send a cleaning signal to the controller 50 inside the integrated box, and the autonomous driving domain controller or the advanced auxiliary driving domain controller will drive the cleaning water pump to pressurize the water in the vehicle water circuit. After a delay of a period of time, the controller 50 inside the integrated box drives the cleaning device 30 to start working, the electromagnetic valve 32 opens, and the nozzle 33 sprays water to clean the mirror 41 of the laser radar 40. After the cleaning is completed, the electromagnetic valve 32 closes, and the drainage port 71 discharges the accumulated sewage to the water tray 70. When the driving function is exited, the autonomous driving domain controller or the advanced auxiliary driving domain controller sends a signal to close the top laser radar integrated box. The controller 50 inside the integrated box drives the motor 211 to rotate in a reverse direction, and the top laser radar integrated box descends and closes.

From the above description, it can be seen that the hidden top laser radar integrated box provided by the present document has the following advantages: it is designed at a vehicle roof, a position of which is relatively high and makes the laser radar not easily obstructed or destroyed and have a wide field of view, and further can expand the view field of the laser radar to a maximum extent, thereby improving environmental perception effect of the laser radar, and solving the heat dissipation problem caused by radar operation through natural wind cooling. The hidden top laser radar integrated box has a hidden function. When the laser radar is in standby mode, the laser radar, the lifting/lowering device, and the cleaning device are all hidden inside the roof cover of the vehicle, which enhances the overall feel and aesthetics of the vehicle, and a mirror surface of the laser radar is not easy to come into contact with soil and other dirt, thereby implementing an active cleaning function of the laser radar, improving the user experience.

The present document further provides a vehicle, which includes the hidden top laser radar integrated box as described above. Other technical features of the vehicle have been disclosed in the existing technology and will not be repeated here.

The above is only the specific implementation method of the present document, but the protection scope of the present document is not limited to this. Other variations or replacement that can be easily obtained by those having ordinary skill in the art on the basis of the disclosure of the present document should be covered within the protection scope of the present document. Accordingly, the protection scope of the present document should be based on the protection scope of the claims.

## Claims

1. A hidden top laser radar integrated box, **characterized in that** comprising at least an outer housing (10), a lifting/lowering device (20), a laser radar (40), a controller (50), and a lower cover plate (60), the lifting/lowering device (20), the laser radar (40), and the controller (50) being located between the outer housing (10) and the lower cover plate (60), and the laser radar (40) being located above the lifting/lowering device (20), the lifting/lowering device (20) being scalable under a control of the controller (50), driving the laser radar (40) to extend outside or retract into a vehicle.

2. The hidden top laser radar integrated box according to claim 1, wherein the lifting/lowering device (20) comprises at least a driving device (21) and a lifting/lowering platform (22) connected to the driving device (21), the driving device (21) comprises a motor (211), and the lifting/lowering platform (22) comprises a screw rod (221), a first lifting/lowering rod (222), a second lifting/lowering rod (223), and a supporting rod (224), the first lifting/lowering rod (222) and the second lifting/lowering rod (223) are crossed and pivotally connected with each other, the screw rod (221) is connected to lower parts of the first lifting/lowering rod (222) and the second lifting/lowering rod (223), the supporting rod (224) is connected to upper parts of the first lifting/lowering rod (222) and the second lifting/lowering rod (223), and the screw rod (221) is connected to an output shaft of the motor (211) through transmission, a distance between opposite ends of the first lifting/lowering rod (222) and the second lifting/lowering rod (223) is increased or decreased under a drive of the motor (211), thereby extending or shortening the lifting/lowering platform (22).

3. The hidden top laser radar integrated box according to claim 2, wherein the driving device (21) further comprises a gear (212) and a rotating shaft (213), one end of the rotating shaft (213) is connected to the output shaft of the motor (211), and the other end of the rotating shaft (213) is provided with a plurality of teeth, the gear (212) is located at one end of the screw rod (221), the teeth at the other end of the rotating shaft (213) engage with the gear (212) on the screw rod (221), and are driven by the motor (211) to drive the screw rod (221) to rotate.

4. The hidden top laser radar integrated box according to claim 2, wherein the lifting/lowering platform (22) further comprises an upper guide block (225) and a lower guide block (226), upper ends of the first lifting/lowering rods (222) and the second lifting/lowering rods (223) are both pivotally connected with the upper guide block (225), and lower ends of the first lifting/lowering rods (222) and the second lifting/lowering rods (223) are both pivotally connected with the lower guide block (226), the upper guide block (225) and the lower guide block (226) are both provided with small holes, two opposite ends of the supporting rod (224) pass through the small holes of the upper guide block (225), and one end of the supporting rod (224) is slidably connected to the upper guide block (225), two opposite ends of the screw rod (221) pass through the small holes of the lower guide block (226), and one end of the screw rod (221) is threaded with the lower guide block (226).

5. The hidden top laser radar integrated box according to claim 2, wherein the hidden top laser radar integrated box further comprises a cleaning device (30), which is located on opposite sides of the laser radar (40), and two opposite ends of the supporting rod (224) are provided with brackets (227), which are connected to the cleaning device (30) and the laser radar (40).

6. The hidden top laser radar integrated box according to claim 5, wherein the cleaning device (30) comprises at least a fixing frame (31), an electromagnetic valve (32), a nozzle (33), a connecting portion (34), and a water inlet (35), the fixing frame (31) is connected to the laser radar (40), and the electromagnetic valve (32), the nozzle (33), the connecting portion (34), and the water inlet (35) are arranged on the fixing frame (31), one end of the electromagnetic valve (32) is connected to the connecting portion (34), and the other end of the electromagnetic valve (32) is connected to the water inlet (35), a pipeline connected to the water inlet (35) is connected to a vehicle water circuit, and the nozzle (33) is connected to the connecting portion (34), and the nozzle (33) has a telescopic function.

7. The hidden top laser radar integrated box according to claim 1, wherein one side of the laser radar (40) is provided with a mirror (41), and the other side of the laser radar (40) is connected with a second cable, which is connected to an autonomous driving domain controller or an advanced auxiliary driving domain controller.

8. The hidden top laser radar integrated box according to claim 1, wherein a sealing ring (11) is provided around a top portion of the outer housing (10).

9. The hidden top laser radar integrated box according to claim 1, wherein the hidden top laser radar integrated box further comprises a water tray (70), the lower cover plate (60) is located within the water tray (70), and a drainage outlet (71) is provided on the water tray (70), a water pipe connected to the drainage outlet (71) is connected to a vehicle water circuit.

10. A vehicle, **characterized in that** comprising a hidden top laser radar integrated box according to any one of claims **1-9.**
